# EUROPEAN PATENT APPLICATION

(11) **EP 2 426 634 A1**
(43) Date of publication of application: **07.03.2012**
(21) Application number: 10405162.8
(22) Date of filing: 03.09.2010
(51) Int. Cl.: G06Q 90/00

(54) **Computer-implemented method and system for processing and monitoring business-to -business relationships**

(71) Applicant: Blueconomics Business Solutions GmbH, 8184 Bachenbülach (CH)
(72) Inventor: Uthmann, Andreas, 8184 Bachenbülach (CH)

(57) **Abstract**

The invention relates to a computer-implemented method and system for processing and monitoring business-to-business relationships, with the steps of creating social network maps considering social relationship structures, said social relationship structures having nodes of individuals (211 ... 215, 221 ... 223, 231 ... 232, 241 ... 245, 251 ... 253, 261 ... 263) and/or teams (210, 220, 230, 240, 250, 260), which are interconnected by social relationships, wherein at least one of said nodes of individuals (211 ... 215, 221 ... 223, 231 ... 232, 241 ... 245, 251 ... 253, 261 ... 263) and/or teams (210, 220, 230, 240, 250, 260) and/or social relationships are associated with business activity related information, processing business activities by identifying nodes (211 ... 215, 221 ... 223, 231 ... 232, 241 ... 245, 251 ... 253, 261 ... 263) and/or teams (210, 220, 230, 240, 250, 260) and/or social relationships of relevance for conducting said business activities and for defining related tasks, monitoring changes to nodes and/or teams and/or social relationships, and communicating said changes at least to one terminal device or system via a communication interface.

## Description

The invention relates to the technical field of business methods and particularly to a computer-implemented method for processing and monitoring business-to-business (B2B) relationships according to claim 1, a system for processing and monitoring B2B relationships according to claim 13 and the use of said system according to claims 25 and 26.

B2B management methods for customer relationship management (CRM) are a broadly recognized, widely implemented strategy for managing and nurturing a company's interactions with customers, clients and sales prospects. It involves using technology to organize, automate, and synchronize business processes—principally sales activities, but also those for marketing, customer service, and technical support. The overall goals are to find, attract, and win new clients, nurture and retain those the company already has, entice former clients back into the fold, and reduce the costs of marketing and client service. CRM systems are commonly used by large companies in a process oriented, analytical and/or collaborative way. Typically, contacts can be allocated to certain accounts, departments, projects, opportunities and activities. Also, some systems enable documenting relationships between contacts and contacts or users and contacts. However, to establish social networks for specific projects, like a sales opportunity, additional information is required, like influence level or depth of relationship. Also, while information in CRM systems is satisfying to create a list of contacts related to a specific project, both data structure and processing capabilities are not designed to manage a network of contacts in specific context like an opportunity or project.

In the context of this application, social networks are meant to be social structures made up of individuals or organizations called nodes, which are tied by one or more specific types of interdependency, such as friendship, kinship, common interest, financial exchange, dislike, sexual relationship, or relationships of beliefs, knowledge or prestige. In its simplest form, a social network is a map of all of the relevant ties between all the nodes being studied. A Social Network Service (SNS) focuses on building and reflecting of social networks or social relations among people, e.g. who share interests and/or activities. A social network service essentially consists of a representation of each user, his/her social links, and a variety of additional services. Social network services are commonly used for private or business relationship purposes connecting profiles or friends, colleagues or business partners. Teams with common interests or attributes can also form dedicated groups. Social network maps can be used to graphically represent the social capital of users. However, social network services do not enable users to model specific social networks for specific business activities, i.e. a project. Also, social network services do not allow to differentiate and isolate relationships by relevance to such business activities. Users are further not able to create other contacts/users, add additional information or connections without approval and acceptance (consent) of that user. As a result, users are not able to use SNS for example to monitor and process sales opportunities or project stakeholder information, since only parts of the network should be able to manage and access the whole information. Nevertheless, information available in SNS, can be partially used to form business-activity related social networks maps, but they need to be managed outside of the SNS.

Abbreviations B2B, CRM, SNA and SNS are used for Business-to-Business, Customer Relationship Management, Social Network Analysis and Social Network Services, respectively.

The object of present invention is to overcome the above-mentioned problems and to improve processing and monitoring of complex B2B relationships, especially to provide for a more effective and reliable management thereof.

This objective is solved by a method for processing and monitoring B2B relationships according to claim 1. The method according to the invention is based on a computer-implemented interaction combining existing input, processing and output technologies and methods in a new and innovative way to process and monitor B2B relationships using social network maps generating messages and alarms. This is supported by specific data structures, relationship information like influence level, calculations like network influence, interactive user interface showing a social network map, integration to other social network services and relating messages and alarms.

In view of the solution of the object of present invention, a "task" is meant to be a specific action owned by a person. A task can be related to one or many nodes or teams within a network. A "business activity" shall denote a specific business context of a social network map, e.g. a project or sales opportunity. A "business application" shall be understood to be a system for managing business information like an Enterprise Resource Planning (ERP) or a Customer Relationship Management (CRM) application. A "node" is meant to be an identified person within a social network, whereas a team is a group of persons within a social network. A "relationship" shall be a specific connection between teams or persons within a social network, and a "social network map" shall be a graphical representation of relationship information. "Social network information" is meant to be any data associated to social relationship structures, like influence level, standpoint level or relationship quality. "Business rules" shall be configurable, pre-defined business logic to monitor, notify and process information in social networks.

Preferred embodiments of the method are mentioned in claims 2 to 12.

In one aspect of the present invention, the method further comprises the step of considering user authentication and user authorization according to pre-defined user profiles. Through user authentication, a user can be uniquely identified via a secure mechanism, like password protection, personal identification number (PIN), mobile transaction code and/or a combination of those. Once identified, user profile information, like role, license agreement, status, etc. is being used to enforce information access of this person on the database level. This is a technical prerequisite to enable potential users to manage information about accounts and contacts, with or without their consent, while ensuring full data integrity and confidentiality of highly sensitive and partially competitive business activity information.

In another aspect of the present invention, the step of processing the business activities includes applying social network analysis for calculating network influence of nodes and/or teams considering the business related information associated with at least one of the nodes and/or teams and the social relationships. The network influence is a very important indicator to determine the overall importance and hence, relevance level, of each node and/or team on the overall decision process for the business activity. Knowing the network influence enables users to focus effort and resources on the most relevant nodes and/or teams, thereby increasing efficiency as well as effectiveness of processing business activities.

In a further aspect of the present invention, the step of processing the business activities based on the social network information includes ranking the nodes and/or teams in terms of relevance to the processed business activities according to pre-defined ranking criteria. Each ranking can be presented in form of a priority list to the user to provide specific information transparency and guidance to define the strategy and action plan, managed in form of tasks, for successfully processing a specific business activity, based on different criteria, like influence, standpoint and/or network influence.

In still another aspect of the present invention, the step of processing the business activities includes applying objectives and decision criteria to the business related information associated with at least one of the nodes and/or teams. By being able to analyze, aggregate and compare individual objectives and decision criteria across nodes, teams and/or networks, users are able to further increase effectiveness of processing business activities, i.e. by defining tasks to either change or address relevant objectives and/or decision criteria.

In still another aspect of the present invention, the method further comprises the step of including at least one of influence level, standpoint, role and quality and/or direction of social relationship information into the business activity related information. While a network typically consists of multiple nodes and/or teams, most likely the relevance for a specific business activity will differ widely between them. In order to differentiate the relevance of nodes and/or teams, additional information attributes are being processed to help the user to assess its importance and prioritize tasks.

In still another aspect of the present invention, the method further comprises the step of including multi-level relationship structures grouping nodes into teams and/or organizations. While plain social network maps already provide a good overview about existing connections in a social network, visualizing multiple levels of teams and/or organizations yield increased transparency and advanced manageability to users. For example, it requires less input of business activity related information, like influence level, since it can be applied automatically to all members of a team and/or organization. Furthermore, it enables to manage team-related information and rankings to process business activities more efficiently and effectively.

In still another aspect of the present invention, the method further comprises the step of retrieving and/or communicating at least part of the business related information associated with nodes and/or teams and/or social relationships from and/or to already existing social network services, and/or other web services and/or business applications. In order to avoid double entry of data in different systems and/or increase volume, value and/or quality of social network information, integration to further potential information sources is provided.

In still another aspect of the present invention, the step of monitoring and communicating the changes to nodes and/or teams and/or social relationships includes considering predefined business rules. Configuration of business rules allow users to define which systems and/or users should receive which information messages and alarms via which communication channels in case of which events to reflect specific information needs.

In still another aspect of the present invention, the step of monitoring and communicating the changes to nodes and/or teams and/or social relationships includes creating alarm messages. In case, specific social network information can be classified as very critical to the business activity, it will be important for users to be immediately informed about relevant changes. In such cases, alarms can be created to inform users visually, via audio or other media to ensure user attention and enable fast reaction.

In still another aspect of the present invention, the step of communicating the changes of nodes and/or teams and/or social relationships includes aggregating said changes by a newsfeed service in terms of relevance and chronology. While newsfeeds are common ways of presenting information within social network services (SNS), applying it to communicate changes to social network information related to specific business activities can provide additional information transparency.

In still another aspect of the present invention, the step of generating social network maps includes presenting business activity related information and/or tasks and/or related messages in an interactive way and the step of processing business activities includes receiving user generated content entered on said social network maps presented. Implementing a method and/or system can be directly related to how well the users are being supported in using it. While most transactional systems are asking users to enter data on cards or tables, providing an option to navigate and enter data directly on an interactive map, will further increase user acceptance.

The above-mentioned object of present invention is furthermore achieved by a system according to claim 13. The system provides a management framework to process and monitor multiple decision makers in multi-level decision processes or complex value chains by integrating formal and informal relationships and combining soft and hard decision criteria. Thus, leverage of the collective knowledge and relationships of e.g. different stakeholders in an integrated way, planning, executing and monitoring an action set required for successful stakeholder management and updating and notifying internal stakeholders according to the relevance and related business rules is enabled. This ultimately increases project outcome like win rate, shortens decision cycles, enables to focus on most effective tasks and activities, to navigate politics and to react quickly on any changes.

Preferred embodiments of the system are mentioned in claims 14 to 24.

In one aspect of the present invention, the application is connected to a directory service to consider user profile information for user authentication and authorization. Using a directory service enables to identify a user and using his profile information to enforce information access on the database level. Technically, this allows protecting sensitive information against unauthorized access.

In another aspect of the present invention, the processing unit is adapted to apply social network analysis for example to calculate network influence of nodes and/or teams considering the business activity related information. This information can be further used for reporting purposes providing decision support to users of the system to increase business activity effectiveness.

In a further aspect of the present invention, the processing unit is adapted to rank the nodes and/or teams to the processed business activities in terms of pre-defined ranking criteria. Such ranking lists provide additional decision support to users and enable the system for example to propose tasks for effective processing of the business activity based on different criteria, like influence, standpoint and/or network influence.

In still another aspect of the present invention, the processing unit is further adapted to apply objectives and decision criteria to the profile data of individual nodes and/or teams. By analyzing, aggregating, and comparing this information across nodes, teams and/or networks, users are able to further increase the effectiveness of processing business activities.

In still another aspect of the present invention, the profile data of individual nodes and/or teams and the profile data of social relationships include at least one of influence level, standpoint, role and quality and/or direction of social relationship information. By processing such business activity related information within the system, the relevance of teams and/or nodes can be differentiated and analysed by the system helping the user to assess its importance and prioritize tasks.

In still another aspect of the present invention, the system comprises multi-level relationship structures grouping nodes into teams and/or organizations. Being able to process and visualize multiple levels of teams and/or organizations yield increased transparency and advanced manageability to users thereby increasing efficiency of the system. It also increases user acceptance through simple, intuitive use.

In still another aspect of the present invention, the communication interface is adapted for retrieving and/or communicating at least part of the business activity related information associated with nodes and/or teams and/or social relationships from and/or to already existing social network services, and/or other web services and/or business applications. This integration enables to automate information exchange between different systems to increase volume, value and/or quality of social network information in the system.

In still another aspect of the present invention, the monitoring unit and communication interface are adapted to report the changes to the profile data of nodes and/or teams and/or the profile data of social relationships considering predefined business rules stored in the database. Configuring of business rules allows users to inform the targeted users and/or systems about the most relevant events via the most effective channels.

In still another aspect of the present invention, the monitoring unit and the communication interface are further adapted to create alarm messages based on changes of the profile data of nodes and/or teams and/or the profile data of social relationships. In order to enable fast reaction on critical changes in the system, it is important that alarm messages alert the user visually, via audio or other media to ensure immediate attention.

In still another aspect of the present invention, the system further comprises a newsfeed service unit adapted to aggregate changes of profile data of nodes and/or teams and/or profile data of social relationships in terms of relevance and chronology. Newsfeeds provide an efficient means of informing the users about latest changes and hence will further enhance the value and user acceptance of the system.

In still another aspect of the present invention, the map generating unit is adapted to present social network maps including business activity related information and/or tasks and/or related messages in an interactive way and the processing unit is adapted to receive user generated content entered on said social network maps presented. Graphical navigation and interactivity of the system will enhance the usability thereby reducing training needs and further increase user acceptance.

Preferably, the system of the invention is used as a software-as-a-service model, which may be made available on the Internet on a paid-per-use basis.

While most of the time said system is applied in the context of managing sales projects and/or opportunities, it is not limited to it and can generally be used to manage other multi-level stakeholder communities and B2B relationship networks, especially in complex business environments, sales, marketing and services processes (CRM), like opportunity management, account planning, campaign management, partner management, influencer management, full-service agreements, project management, investor relations management, community management, supply chain management and contracting.

In the following, the invention is described in detail with reference to the attached figures. Same elements and elements of same function are given the same reference numerals. The figures show the following:
- Figure 1: a schematic representation of the technical field of the invention;
- Figure 2: is a schematic representation of an example of a social network map according to the invention;
- Figure 3: is a function chart of a system for processing and monitoring B2B relationships according to the invention;
- Figure 4: is a schematic representation of social network information connected to nodes, teams and their relationship according to the invention;
- Figure 5: is a schematic representation of a service-oriented infrastructure of a system according to the invention;
- Figure 6: is a schematic representation of a data model of a system according to the invention, and
- Figure 7: is a flow chart showing processing steps triggered by user interaction in a system according to present invention.

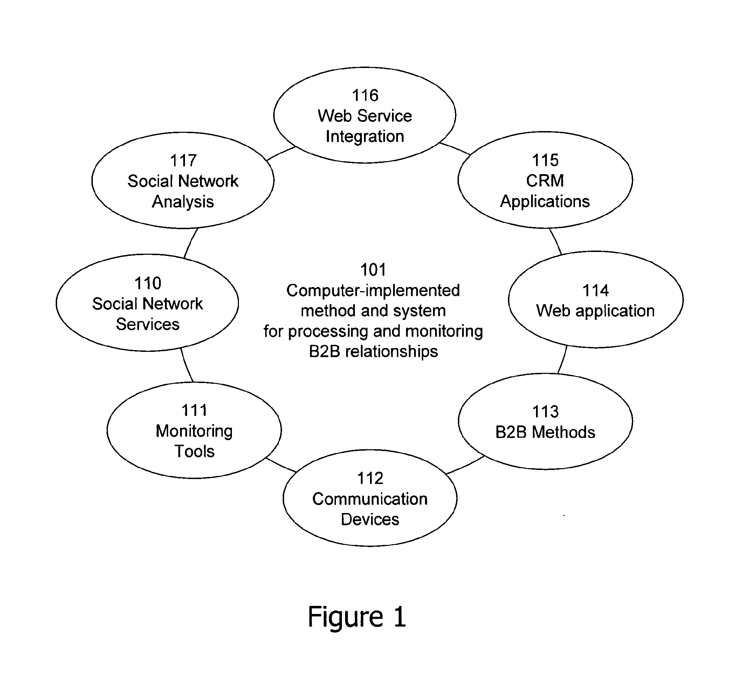

Figure 1 is a schematic representation of the technical field of the invention. The method and system 101 described applies and combines existing methods and technologies in a unique and innovative way. It can be classified as a customer relationship management (CRM) application 115 integrating and advancing different B2B methods 113 by applying social network analysis 117. Operated as a web application 114, it integrates social network services 110 and other business applications via web service integration 116. It uses real-time monitoring tools 111 and communication devices 112 to manage messages and alarms.

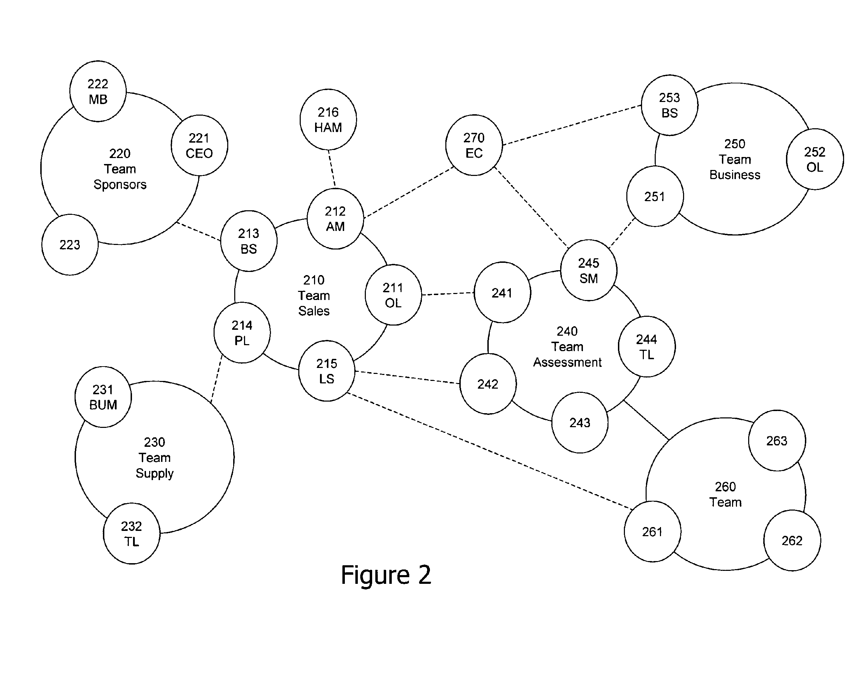

Figure 2 is a schematic representation of an example of a social network map according to the invention. A social network map visualizes social relationship structures consisting of nodes, teams and relationships. In figure 2, a node is displayed in form of a small circle, for example 216, 212, 211, 241, while teams are represented as larger circles 210, 220, 230, 240, 250, 260. Nodes can be either directly allocated to a team, for example 211, 212, 213, 214 and 215 are allocated to "Team Sales" 210, or act as satellites, for example 216, which does not directly belong to a team. Relationships are shown as dotted lines connecting either nodes with other nodes and/or nodes with teams and/or teams with other teams. In this example, node 211 has a direct relationship to node 241, while node 211 is not directly related to node 270.

Additional business activity related information can be displayed on the map. In figure 2, abbreviations are used representing the role of nodes, e.g. "OL" for "opportunity lead" 211 or "AM" for "account manager" 212, or the name of teams, e.g. "Team Sales" 210. To further increase usability and transparency, additional colour coding or graphical elements can be used to display business activity related information, i.e. the quality of relationship by the thickness of the line or the influence level of a node by the colour intensity of the circle.

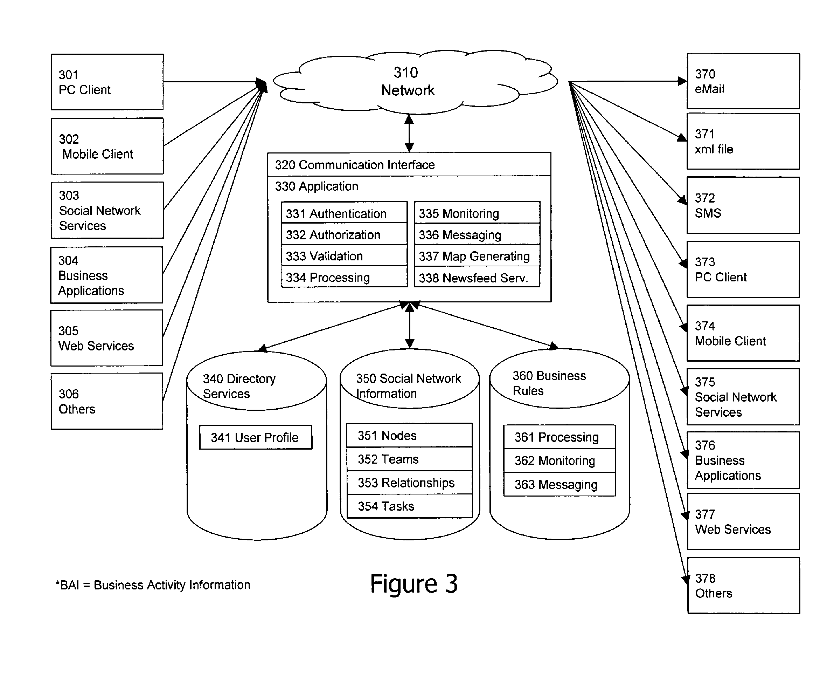

Figure 3 is a function chart of a system for processing and monitoring B2B relationships according to the invention. The system consists of a communication interface 320, an application 330 and a set of databases 340, 350, 360. The communication interface 320 is able to receive information from any external input device 301 ... 306 send over the network 310. Inputs can be provided by users via a specific user interface, i.e. PC or mobile client 301, 302 or indirectly via other systems or services 303 ... 306. The application itself is equipped with an authentication unit 331 and authorization unit 332 using user profiles 341 provided by the directory services 340 to manage information access. The application further contains a validation function 333 and processing unit 334 to prepare social network information being stored in the database 350 consisting of information related to nodes 351, teams 352, relationships 353 and tasks 354. A monitoring unit 335 and messaging unit 336 are able to generate messages and alerts sent via the communication interface 320 over the network 310 to different output devices 370 ... 378. The application further consists of a map generation unit 337 to visualize the social network information 350 as well as a newsfeed service unit 338 to aggregate any changes for the user. Some functions can be further controlled by pre-configurable logic for processing 361, monitoring 362 and messaging 363 stored in form of business rules 360. The different outputs generated can be send over the network 310 to different output devices, like email, xml, SMS to the users 370 ... 374 and/or to other services and applications 375 ... 378.

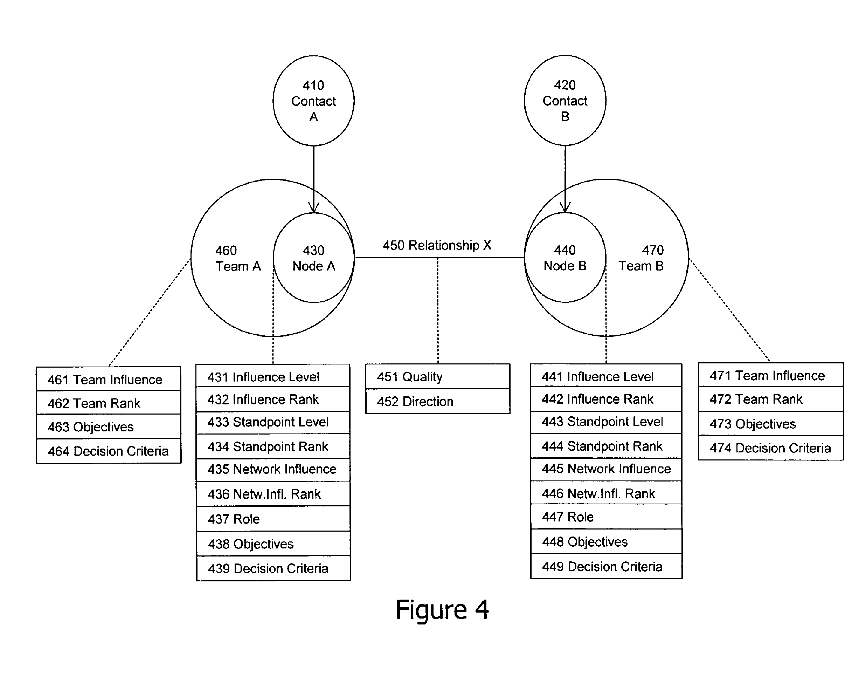

Figure 4 is a schematic representation of social network information connected to nodes 430 and 440, teams 460 and 470 and their relationship 450 according to the invention. Nodes within a social network can be created by adding a contact, as shown for Contact A with reference sign 410 becoming node A with reference sign 430 or Contact B with reference sign 420 becoming Node B with reference sign 440. Nodes can be directly allocated to a team, as shown for Node A belonging to Team A and Node B belonging to Team B.

Relationship 450 is connecting Node A with Node B, completing the social relationship structure. This structure can be used to add business-activity related information associated either to the Nodes 430, 440, Teams 460, 470 or relationships 450. For example a node can be further characterized by network influence level 431, 441, standpoint 433, 443, role 437, 447, objectives 438, 448 and/or decision criteria 439, 449. In connection with other social network information, influence rank 432, 442, standpoint rank 434, 444 and network influence 435, 445 as well as network influence rank 436, 446 can be calculated. Likewise, teams can be characterized by team influence 461, 471, objectives 463, 473 and decision criteria 464, 474 and the team rank can be calculated 462, 472. Relationships itself can be further characterized by the quality 451 and direction 452 of the connection.

The following table summarizes the different rankings that can be calculated based on the business activity related information described and by applying social network analysis. For example Contact B has a calculated network influence of 23% of the business activity, just ranking on 2^{nd} position.

| **Stakeholder** | **influence** | | **Team influence** | | **Standpoint** | | **Relationship** | | | | **Network influence** | |
|---|---|---|---|---|---|---|---|---|---|---|---|---|
| | **Number** | **Rank** | **Number** | **Rank** | **Number** | **Rank** | **Value** | **Volume** | **Quality** | **Relevance** | **Number** | **Rank** |
| **Contact A** | **7** | **2** | **8** | **1** | **9** | **1** | **7** | **12** | **8** | **7** | **36%** | **1** |
| **Contact B** | **8** | **1** | **8** | **1** | **7** | **3** | **4** | **7** | **8** | **7** | **23%** | **2** |
| **Contact C** | **7** | **2** | **7** | **2** | **5** | **4** | **2** | **5** | **7** | **6** | **12%** | **3** |
| **Contact D** | **7** | **2** | **8** | **1** | **8** | **2** | **2** | **8** | **4** | **5** | **11%** | **4** |
| **Contact E** | **6** | **3** | **7** | **2** | **4** | **5** | **2** | **5** | **6** | **7** | **9%** | **5** |
| **Contact f** | **7** | **2** | **6** | **3** | **2** | **6** | **1** | **4** | **5** | **5** | **8%** | **6** |
| ... | ... | ... | ... | ... | ... | ... | ... | ... | ... | ... | ... | ... |

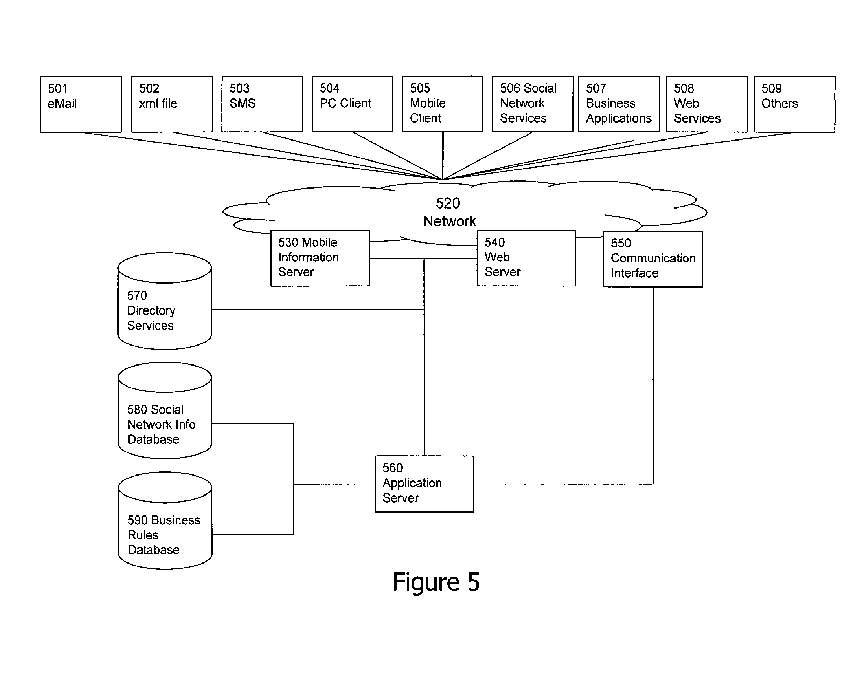

Figure 5 is a schematic representation of a service-oriented architecture of a system according to the invention. From a logical architecture point of view, the system consists of an application server 560 to process information, a database service 580, 590 to store social network information 580 and configurable business rules 590, a directory service 570 providing authentication and authorization information in form of user profiles, a web server 540 to present information to PC clients 504, a mobile information server 530 to present information to mobile clients 505 as well as a communication interface 550 to communicate data from and to different input and output devices 501 ... 509 over the network 520. Please note, that the physical architecture might differ from the logical architecture shown in Figure 5, whereby a specific hardware server might host multiple logical servers shown, for example 580 and 590 will be hosted in one database server, or a logical server itself, e.g. 590, might be hosted on different physical servers in a clustered or distributed way.

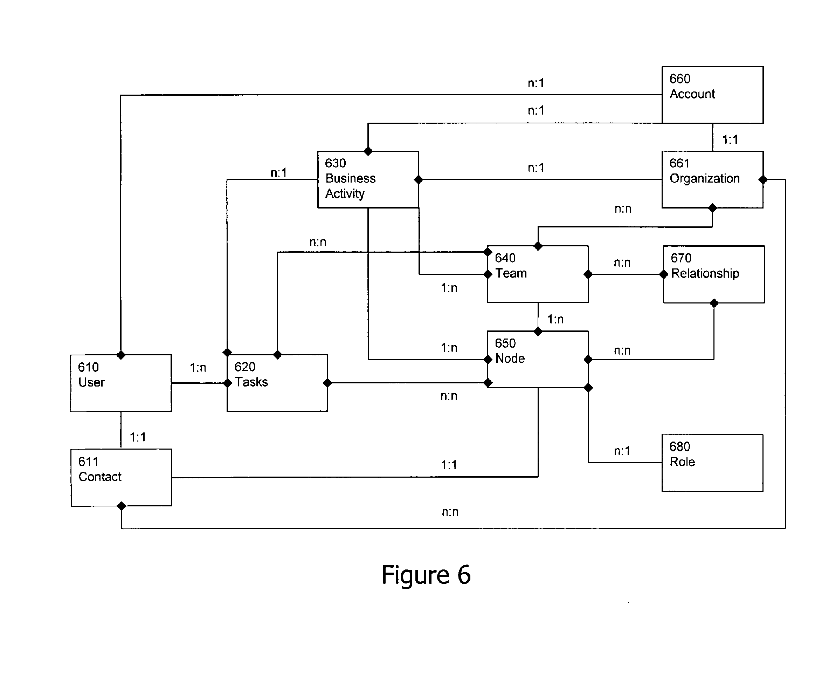

Figure 6 is a schematic representation of a data model of a system according to the invention. Each box represents a data object and its related attributes while the lines represent the relationship between 2 objects. The relationship can be either 1:1, meaning for example one user 610 relates to one contact 611, or 1:n, meaning for example one team 640 can consist of multiple nodes 650, or n:n, meaning for example a specific team 640 can have multiple relationships 670, but also a specific relationship 670 can connect multiple teams 640. Social relationship structures are represented by nodes 650, teams 640, consisting of multiple nodes 650 and relationships 670 connecting nodes with nodes, nodes with teams or teams with other teams. The system creates a social network map per business activity 630 where multiple nodes 650, teams 640 and (indirectly) relationships 670 can be associated. Each node can have a dedicated role 680 in the network. Each node 650 can be created from a specific contact 611 who can or cannot equal a user 610 of the system. As a result of the process, specific tasks 620 can be created, always owned by a specific user 610. One or many users always belong to an account 660, i.e. the licensing entity of the service. An organization 661 can either equal an account or be created representing a customer or partner organization as part of the network. Organizations 661 can have multiple contacts 611. A business activity can only be owned by one specific account and also only relate to one specific customer company. While the data model described represents a potential data structure for the system, the invention is not limited to it, instead modifications and/or further extensions of objects are possible.

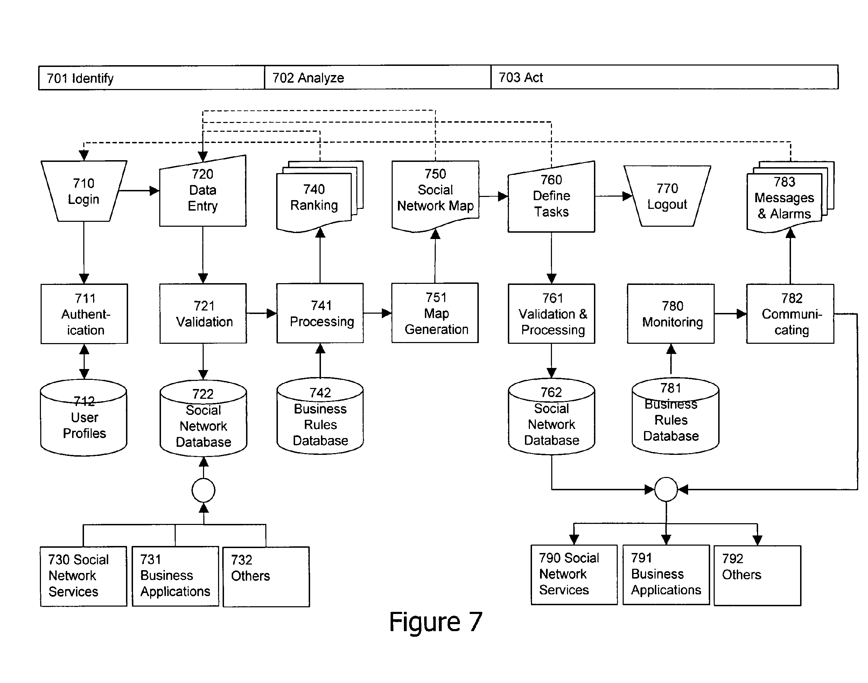

Figure 7 is a flow chart of processing steps triggered by user interaction in a system according to present invention. The logical sequence is displayed from left to right, whereby each box represents a process step. Vertically, it can be grouped into 4 levels, whereby the upper level represents user activities, the second level the application, the third the database layer, the bottom external systems. The chart can be clustered horizontally into 3 main phases: It starts with identifying 701 relevant social network information. Once captured, it can be analysed 702 by calculating, ranking and visualising the information. Finally, the output is being used to act 703 by defining a strategy and related actions, in form of tasks, and monitor the progress.

Phase 1 "Identify" 701 itself starts with the login 710 of the user and it's authentication 711 against the user profiles 712. Once passed, the user is able to enter relevant data 720, which is being validated 721 and stored in the social network database 722. It is also possible to add existing information from external systems, like social network services 730, business applications 731 or other services 732, to the social network database 722.

In phase 2 "Analyze" 702, the information is being processed 741 according to pre-defined business rules 742. The results can be either displayed in form of rankings 740 to the user or further used to generate maps 751 providing interactive social network maps 750 to the user.

In phase 3 "Act" 703, the presented social network information can be used to create "tasks" 760 which, after validating and processing 761 are also being stored in the social network database 762. At any point in time, the user can decide to enter further or change different social network information 720. Any information can also be transferred to social network services 790, other business applications 791 and/or other services 792. After completion of the before mentioned process steps, the user can logout 770 to finish the session.

It is possible for different users to follow above process steps simultaneously, so at any point in time, and based on pre-defined business rules stored in the database 781, a monitoring process 780 will identify changes of relevance triggering a communication process 782 to either send certain information to other social network services 790, business applications 791 or other services 792 and/or present different messages and or alarms 783 directly to users. The user itself might again act on it, by login to the system 710 and entering new or changed data 720.

This process is being followed until the business activity is being finally closed in the system. It can run in multiple parallel sessions for the same or different business activities.

## Claims

1. Computer-implemented method for processing and monitoring business-to-business relationships, comprising the steps of:
creating social network maps (751, 200) considering social relationship structures, said social relationship structures having nodes of individuals (430, 440) and/or teams (460, 470), which are interconnected by social relationships (450), wherein at least one of said nodes of individuals and/or teams and/or social relationships are associated with business activity related information (461 ... 464, 431 ... 439, 451 ... 452, 441 ... 449, 471 ... 474),
processing business activities (741) by identifying nodes and/or teams and/or social relationships of relevance for conducting said business activities and for defining related tasks (354, 620, 760),
monitoring changes (780) to nodes and/or teams and/or social relationships, and
communicating said changes (780) at least to one terminal device or system via a communication interface (320, 550).

2. Method according to Claim 1, which further comprises the step of considering user authentication and user authorization (331, 332, 711) according to pre-defined user profiles (341, 712).

3. Method according to Claim 1 or 2, wherein the step of processing the business activities (741) includes applying social network analysis for calculating network influence of nodes (435, 445) and/or teams (461, 471) considering the business related information associated with at least one of the nodes and/or teams and the social relationships.

4. Method according to any one of the preceding Claims, wherein the step of processing the business activities (741) based on the social network information (200) includes ranking the nodes (432, 434, 436, 442, 444, 446) and/or teams (462, 472) in terms of relevance to the processed business activities according to pre-defined ranking criteria (432, 434, 436, 442, 444, 446, 462, 472).

5. Method according to any one of the preceding Claims, wherein the step of processing the business activities (741) includes applying objectives and decision criteria (438, 439, 448, 449, 443, 464, 473, 474) to the business related information associated with at least one of the nodes and/or teams.

6. Method according to any one of the preceding Claims, further comprising the step of including at least one of influence level (431, 441), standpoint (433, 443), role (437, 447) and quality and/or direction of social relationship (451, 452) information into the business activity related information.

7. Method according to any one of the preceding Claims, further comprising the step of including multi-level relationship structures grouping nodes into teams (640) and/or organizations (661).

8. Method according to any one of the preceding Claims, further comprising the step of retrieving and/or communicating at least part of the business related information associated with nodes and/or teams and/or social relationships from and/or to already existing social network services (303, 375, 506), and/or other web services (305, 377, 508) and/or business applications (304, 376, 507).

9. Method according to any one of the preceding Claims, wherein the step of monitoring (780) and communicating (782) the changes to nodes and/or teams and/or social relationships includes considering predefined business rules (360, 580, 742, 781).

10. Method according to any one of the preceding Claims, wherein the step of monitoring (780) and communicating (782) the changes to nodes and/or teams and/or social relationships includes creating alarm messages (783).

11. Method according to any one of the preceding Claims, wherein the step of communicating (782) the changes of nodes and/or teams and/or social relationships includes aggregating said changes by a newsfeed service (338) in terms of relevance and chronology.

12. Method according to any of the preceding claims, wherein the step of generating social network maps (751, 200) includes presenting business activity related information (461 ... 464, 431 ... 439, 451 ... 452, 441 ... 449, 471 ... 474) and/or tasks (354, 620) and/or related messages (783) in an interactive way and the step of processing business activities (741) includes receiving user generated content entered on said social network maps (200) presented.

13. System for processing and monitoring business-to-business relationships according to any one of the preceding Claims, said system comprising:
a database for storing social network information (580, 350), said social network information including data representing social relationship structures (460, 430, 450, 440, 470) and data representing business activity related information (461 ... 464, 431 ... 439, 451 ... 452, 441 ... 449, 471 ... 474), said social relationship structure data including profile data of nodes (430, 440) and/or teams (460, 470) and profile data of social relationships (450) interconnecting said nodes and/or teams, and said data representing business activity related information (461 ... 464, 431 ... 439, 451 ... 452, 441 ... 449, 471 ... 474) being associated to said nodes and/or teams and/or social relationships,
a map-generating unit (337) adapted to create social network maps (751, 200) from the database holding said social network information (580, 350),
a processing unit (334) adapted to consider said social network information for processing business activities to identify nodes and/or teams of relevance and to define tasks (354, 620, 760) related to said business activities,
a monitoring unit (335) for monitoring changes to nodes and/or teams and/or social relationships,
a communication interface (320, 550) for communicating changes of nodes and/or teams and/or social relationships at least to one terminal device or business application (501 ... 509, 370 ... 378).

14. System according to Claim 13, wherein the application (330, 560) is connected to a directory service (340, 570) to consider user profile information (341, 712) for user authentication and authorization (331, 332, 711).

15. System according to any one of Claims 13 or 14, wherein the processing unit (334) is adapted to apply social network analysis to calculate network influence of nodes (435, 445) and/or teams (461, 471) considering the business activity related information.

16. System according to any one of Claims 13 to 15, wherein the processing unit (334) is adapted to rank the nodes and/or teams to the processed business activities in terms of pre-defined ranking criteria (432, 434, 436, 442, 444, 446, 462, 472).

17. System according to any one of Claims 13 to 16, wherein the processing unit (334) is further adapted to apply objectives and decision criteria (438, 439, 448, 449, 443, 464, 473, 474) to the profile data of individual nodes and/or teams.

18. System according to any one of Claims 13 to 17, wherein the profile data of individual nodes and/or teams and the profile data of social relationships include at least one of influence level (431, 441), standpoint (433, 443), role (437, 447) and quality and/or direction of social relationship (451, 452) information.

19. System according to any one of Claims 13 to 18, comprising multi-level relationship structures grouping nodes into teams (640) and/or organizations (661).

20. System according to any one of Claims 13 to 19, wherein the communication interface (320, 550) is adapted for retrieving and/or communicating at least part of the business activity related information (461 ... 464, 431 ... 439, 451 ... 452, 441 ... 449, 471 ... 474) associated with nodes and/or teams and/or social relationships from and/or to already existing social network services (303, 375, 506), and/or other web services (305, 377, 508) and/or business applications (304, 376, 507).

21. System according to any one of Claims 13 to 20, wherein the monitoring unit (335) and communication interface (320, 550) are adapted to report the changes to the profile data of nodes and/or teams and/or the profile data of social relationships considering predefined business rules stored in the database (360, 590, 742, 781).

22. System according to any one of Claims 13 to 21, wherein the monitoring unit (335) and communication interface (320, 550) are further adapted to create alarm messages (783) based on changes of the profile data of nodes and/or teams and/or the profile data of social relationships.

23. System according to any one of the Claims 13 to 22, further comprising a newsfeed service unit (338) adapted to aggregate changes of profile data of nodes and/or teams and/or profile data of social relationships in terms of relevance and chronology.

24. System according to any one of the claims 13 to 23, wherein the map generating unit (337) is adapted to present social network maps (200) including business activity related information (461 ... 464, 431 ... 439, 451 ... 452, 441 ... 449, 471 ... 474) and/or tasks (354, 620) and/or related messages (783) in an interactive way and the processing unit (334) is adapted to receive user generated content entered on said social network maps (200) presented.

25. Use of a system according to any of the claims 13 to 24, as a software-as-a-service model.

26. Use of a system according to any of the claims 13 to 25, for managing sales projects and/or opportunities.
